# FASCICULE DE BREVET EUROPEEN

(11) **EP 2 504 093 B1**
(45) Date de publication et mention de la délivrance du brevet: **02.01.2019**
(21) Numéro de dépôt: 10782311.4
(22) Date de dépôt: 26.11.2010
(51) Int. Cl.: B01J 20/18, B01J 20/20, B01D 53/04

(54) **COMPOSITION COMPRENANT UN CHARBON ACTIF, UNE ZEOLITHE ET DES IONS FE POUR FILTRE A AIR D'HABITACLE DE VEHICULE.**
ZUSAMMENSETZUNG MIT EINEM AKTIVIERTEN KOHLENSTOFF, EINEM ZEOLITH UND EISENIONEN FÜR EIN LUFTFILTER EINES FAHRZEUGINSASSENRAUMS
COMPOSITION INCLUDING AN ACTIVATED CARBON, A ZEOLITE AND FE IONS, FOR A VEHICLE PASSENGER COMPARTMENT AIR FILTER

(30) Priorité: 27.11.2009 FR 0905736
(43) Date de publication de la demande: 03.10.2012
(73) Titulaire: Valeo Systèmes Thermiques, 78321 Le Mesnil Saint Denis (FR)
(72) Inventeur: LADRECH, Frédéric, F-78310 Maurepas (FR); MARTINELL, Amanda, F-78650 Saulx Marchais (FR); CAUDY, Natacha, F-61438 Flers cedex (FR); DEL FABRO, Laetitia, F-78288 Guyancourt (FR); ONDARTS, Michel, F-65000 Tarbes (FR); HORT, Cécile, F-64320 Lee (FR)
(74) Mandataire: Gevers & Orès
(86) Numéro de dépôt international: PCT/EP2010/068339
(87) Numéro de publication internationale: WO 2011/064346

(56) Documents cités:
- EP-A2- 1 121 978
- WO-A1-2008/133181
- DD-A5- 299 622
- US-A- 4 604 110
- DATABASE WPI Week 200328 Thomson Scientific, London, GB; AN 2003-282982 XP002586977, & JP 2003 020489 A (TOKYO GAS CO LTD) 24 janvier 2003 (2003-01-24)
- DATABASE WPI Week 200872 Thomson Scientific, London, GB; AN 2008-M28496 XP002587022, & KR 2008 045 818 A (SAMCHULLY CO LTD) 26 mai 2008 (2008-05-26)
- DATABASE COMPENDEX [Online] ENGINEERING INFORMATION, INC., NEW YORK, NY, US; 1996, HUSSEY FRANK ET AL: "Removal of VOC's from industrial process exhaust with carbon and zeolite adsorbents", XP002586978, Database accession no. EIX98183836239 & PROCEEDINGS OF THE AIR & WASTE MANAGEMENT ASSOCIATION'S ANNUAL MEETING & EXHIBITION 1996 AIR & WASTE MANAGEMENT ASSOC, 1996, page 10pp,
- DATABASE WPI Week 200716 Thomson Scientific, London, GB; AN 2007-154505 XP002586979, & JP 2007 000605 A (LG HOUSEHOLD & HEALTHCARE LTD) 11 janvier 2007 (2007-01-11)
- BAEK S-W ET AL: "Design of dual functional adsorbent/catalyst system for the control of VOC's by using metal-loaded hydrophobic Y-zeolites", CATALYSIS TODAY, ELSEVIER, NL LNKD- DOI:10.1016/J.CATTOD.2004.06.107, vol. 93-95, 1 septembre 2004 (2004-09-01), pages 575-581, XP004548995, ISSN: 0920-5861

## Description

L'invention se rapporte aux compositions comprenant un charbon actif, une zéolithe et des ions Fe utilisées dans les filtres à air pour système de ventilation, chauffage et/ou climatisation de véhicule automobile. L'invention se rapporte également aux filtres à air comprenant une telle composition.

La filtration habitacle sert à filtrer à la fois les polluants sous forme de particules et les polluants gazeux. Deux types de filtre existent aujourd'hui sur le marché. D'une part, les filtres particules ayant pour objectif uniquement une filtration des particules de l'air entre 0,1 et 10µm et plus. D'autre part, des filtres combinés ayant la double fonction de filtrer les particules, mais aussi les gaz et les odeurs venant soit de l'extérieur de l'habitacle, soit de l'habitacle lui-même lorsque le volet d'entrée d'air du système de ventilation, chauffage et/ou climatisation est placé en position de recirculation.

Les filtres combinés utilisent aujourd'hui des charbons actifs pour purifier l'air des gaz et des odeurs (une couche de non-tissé prenant en sandwich cette couche de charbon suivant différentes méthodes d'assemblage). Les charbons actifs utilisés sont communément choisis pour leur affinité à retenir quatre gaz d'essais : le toluène, le n-butane, le dioxyde d'azote et le dioxyde de soufre. Ces essais sont réalisés majoritairement suivant L'ISO-11 155 partie 2. Cette norme décrit une méthode utilisant les 4 gaz précités à fortes concentrations. La performance des filtres est testée gaz par gaz et non pas en mélange.

Les résultats d'essais obtenus suivant cette norme, montrent des affinités variables entre les charbons utilisés et les polluants servant à évaluer la performance globale du filtre. Ainsi, un certain nombre de polluants -gaz standards d'essais ou gaz complémentaires- ne sont que partiellement arrêtés par les charbons classiquement utilisés. Par ailleurs, les performances au cours du vieillissement du charbon actif, c'est-à-dire - au fur et à mesure qu'il adsorbe des polluants - diminuent de façon plus ou moins rapide au fur et à mesure que les sites actifs du charbon sont occupés. Cette diminution est là encore plus ou moins rapide suivant les charbons et les gaz testés ainsi que les conditions d'hygrométrie et les températures auxquelles sont soumis les charbons.
Pour améliorer les performances de filtration des filtres à air, il a été proposé d'utiliser à la fois un charbon actif et une zéolithe. En effet, certaines zéolithes ont une bonne affinité de filtration des polluants gazeux tels que les aldéhydes. Un exemple d'une telle utilisation est décrit dans le document EP1121978. On y décrit l'utilisation de zéolite de structure cristalline ZSM-5 (ou Pentasil) avec des rapports Si/Al compris entre 30 et 190 et de préférence entre 55 et 90. Les zéolithes utilisées comprennent des ammoniums quaternaires (NH₄⁺) pour améliorer leur affinité envers les aldéhydes.
D'autres documents mentionnent aussi l'utilisation de zéolithe pour des solutions de filtration. Ainsi le brevet US2005075238 propose l'utilisation de zéolithe mélangée à du charbon et du lithium pour la filtration combinée des VOC, CO, CO2 et la déshumidification. Cependant dans ce document la zéolithe a pour unique fonction la déshumidification et n'a pas de fonction d'adsorption des COV (composés Organiques Volatiles, famille dont les aldéhydes fait partie), celle-ci étant faite par le charbon. Le document KR20080045818 (SAMCHULLY CO) divulgue une composition pour la séparation de composés soufrés comprenant un mélange de charbon actif et de zéolithe auquel est ajouté un composé sélectionné parmi le NaOH, Na₂CO₃, KOH, KI, I₂, CuO, Fe₂O₃, ZnO, CuCl₂.2H₂O et FeCl₂.

Le document JP2003020489 (TOYO GAS CO LTD) divulgue un filtre pour la séparation de composés soufrés comprenant une zéolithe échangée par un ou plusieurs métaux de transition sélectionnés parmi les métaux Ag, Cu, Zn, Fe, Co et Ni. Ce filtre comprend un second adsorbant tel que du charbon actif ou du dioxyde de manganèse.

Le document WO2008/133181 (TOYOTA JIDOSHA KABUSHIKI KAISHA) divulgue un matériau adsorbant de NOx à base de zéolithe échangée par des ions Fe.

Le document US 4604110 (S.E. FRAZIER) divulgue un filtre à air pour la séparation de polluants gazeux comprenant un mélange de charbon actif et de zéolithe. La demanderesse a cherché à améliorer la filtration des polluants particulaires et surtout des polluants gazeux. En particulier, la demanderesse a cherché à obtenir une composition permettant de filtrer le plus grand nombre de polluants gazeux, et ce avec une durée de vie satisfaisante sans pour autant diminuer les performances intrinsèques de filtration de chaque composant formant la composition.

Pour cela, elle a mené une étude consistant à évaluer des charbons actifs et des nouveaux adsorbants suivant la norme ISO citée précédemment, mais aussi à les évaluer suivant une nouvelle méthode utilisant une série de polluants à basses concentrations et en mélange, tout en contrôlant la température et l'hygrométrie des essais. Cette étude a permis de simuler des conditions d'utilisation réalistes telles que celles rencontrées en zone polluée. Cette étude a permis d'évaluer les performances de nouveaux charbons, mais aussi, de sélectionner une zéolithe ayant une affinité particulière pour les polluants sélectionnés.
L'invention porte donc sur une composition comprenant un charbon actif et une zéolithe, caractérisée en ce que la zéolithe comprend 0,1 à 1,2% en masse d'ions Fe et le rapport massique entre la zéolithe et le charbon actif est compris entre 5 et 35%. Les résultats ont permis de sélectionner une combinaison particulière d'une zéolithe, d'un ion et d'un charbon actif. Cette combinaison particulière a révélée des effets surprenants quant à la qualité de filtration de gaz polluants. Il existe une synergie quant à la filtration de gaz polluants de la composition. En effet, cette composition fournit des résultats de filtration de gaz polluants meilleurs que l'addition des résultats respectifs du charbon actif et de la zéolithe.

Avantageusement, les ions Fe sont des ions ferriques ou ferreux.
Avantageusement, les ions Fe sont retenus à l'intérieur de la zéolithe.
Avantageusement, la zéolithe a une structure cristalline ZSM-5.
Avantageusement, la zéolithe a un rapport molaire de SiO₂/Al₂O₃ compris entre 60 et 20.
Avantageusement, la zéolithe a un rapport molaire de SiO₂/Al₂O₃ compris entre 50 et 30.
Avantageusement, la zéolithe a un rapport molaire de SiO₂/Al₂O₃ de 40.
Avantageusement, la zéolithe est hydrophobe.
Avantageusement, le rapport massique entre la zéolithe et le charbon actif est compris entre 10 et 20%.

Avantageusement, le rapport massique entre la zéolithe et le charbon actif est de 15%.
Avantageusement, le charbon actif a une surface B.E.T de 1004 m²/g, un volume microporeux de 0,356 cm³/g, un volume poreux total de 0,422 cm³/g et un diamètre médian de pores de 4,6 Ǻ.
Avantageusement, le charbon actif a une surface B.E.T de 960 m²/g, un volume microporeux de 0,344 cm³/g, un volume poreux total de 0,404 cm³/g et un diamètre médian de pores de 5,0 Ǻ.
Avantageusement, le charbon actif a une surface B.E.T de 969 m²/g, un volume microporeux de 0,327 cm³/g, un volume poreux total de 0,346 cm³/g et un diamètre médian de pores de 6,8 Ǻ.
Avantageusement, le charbon actif est un mélange de charbons actifs distincts.

L'invention porte également sur un filtre à air pour système de ventilation, chauffage et/ou climatisation comprenant la composition selon l'une quelconque des caractéristiques précédentes.
Avantageusement, la zéolithe et le charbon actif sont disposés selon une unique couche.

D'autres caractéristiques, détails et avantages de l'invention ressortiront plus clairement à la lecture de la description donnée ci-après à titre indicatif en relation avec des dessins dans lesquels :
- la figure 1 représente la structure d'une unité pentasil
- la figure 2 représente la structure d'une zéolithe
- la figure 3 représente des courbes de percée du toluène pour une température de 22°C et un taux d'humidité de 50%
- la figure 4 représente des courbes de percée du n-butane pour une température de 22°C et un taux d'humidité de 50%
- la figure 5 représente des courbes de percée du dioxyde d'azote pour une température de 22°C et un taux d'humidité de 50%
- la figure 6 représente des courbes de percée de l'acétaldéhyde pour une température de 22°C et un taux d'humidité de 50%
- la figure 7 représente des courbes de percée du sulfure d'hydrogène pour une température de 22°C et un taux d'humidité de 50%
- la figure 8 représente d'autres courbes de percée du sulfure d'hydrogène pour une température de 22°C et un taux d'humidité de 50%
- la figure 9 représente la capacité d'adsorption de différentes compositions selon l'invention
- la figure 10 représente un histogramme des performances de filtration à 0 heures
- la figure 11 représente un histogramme des performances de filtration à 30 heures
- la figure 12 représente un histogramme des performances de filtration à 60 heures
- la figure 13 représente une vue d'un filtre comprenant la composition
- la figure 14 représente une vue en coupe de la figure 14 selon une première variante
- la figure 15 représente une vue en coupe de la figure 15 selon une deuxième variante de réalisation

La composition 1 selon l'invention comprend au moins deux adsorbants. La composition 1 comprend un premier adsorbant, une zéolithe 2 et un deuxième adsorbant, un charbon actif 4. Cette composition est utilisée pour la filtration de gaz polluants à l'intérieur d'un système de ventilation, chauffage et/ou climatisation pour véhicule automobile. Plus particulièrement, cette composition est utilisée pour un filtre à air de véhicule automobile.

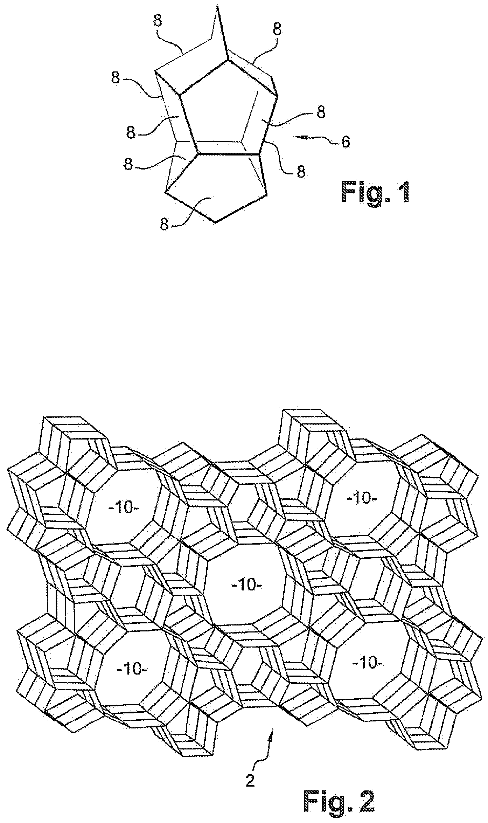

La zéolithe 2 est de structure cristalline ZSM-5. Cette structure ZSM-5 (structure également appelée pentasil) comprend plusieurs unités pentasil 6 liées entre elles par des ponts oxygène. Une unité pentasil 6 comprend huit cycles 8 de forme pentagonale. Les sommets de ces cycles 8 sont formés par l'aluminium Al ou par le silicium Si. Les atomes d'oxygène O assurent la liaison entre les sommets. Ainsi, la zéolithe ZSM-5 comprend des molécules Al₂O₃ et des molécules SiO₂. La figure 1 est une représentation d'une unité pentasil 6 comprenant huit cycles 8.

L'ensemble des unités pentasil 6 de la zéolithe 2 forme des cages 10 dans lesquelles des ions peuvent être logés. Selon l'invention, des ions fer (ci-après nommés ions Fe) s'y logent. On entend par « ion Fe » à la fois des ions ferreux (ions Fe²⁺) ou des ions ferriques (ions Fe³⁺). La figure 2 illustre la formation de cages 10 par la liaison des unités pentasil. Les cages ont une dimension comprise entre 5,4 et 5,6 Ǻ (angström).

La zéolithe 2 selon l'invention est une zéolithe hydrophobe. En outre, la zéolithe 2 présente un rapport SiO₂/Al₂O₃ compris entre 20 et 60. De préférence, ce rapport est compris entre 30 et 50. Selon l'invention, la zéolithe 2 présentant un rapport SiO₂/Al₂O₃ de 40 fournit les meilleurs résultats vis-à-vis des tests de filtration des gaz polluants. Ces résultats seront commentés ultérieurement.

La zéolithe 2 comprend des ions Fe. Le rapport massique entre les ions Fe et la zéolithe est compris entre 0,1 et 1,2%. De préférence, le rapport massique est de 0,5%. Dans le reste de la description, le terme « zéolithe » est employé pour la zéolithe de structure cristalline ZSM-5 comprenant des ions Fe.

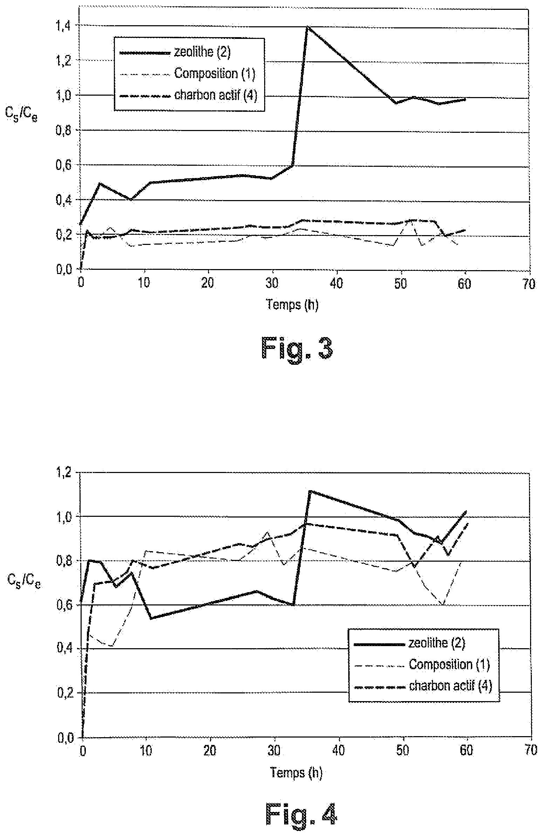

La composition 1 est formée par des granules de zéolithe 2 et de charbon actif 4. La granulométrie de la composition 1 est comprise entre 300 et 600 µm de diamètre. En particulier, le charbon actif présente, pour sa granulométrie, un mode de distribution de 300 µm et la zéolithe présente, pour sa granulométrie, un mode de distribution de 600 µm. En d'autres termes, le charbon actif présente généralement un diamètre de 300 µm et la zéolithe un diamètre de 600 µm. Les valeurs des diamètres de la zéolithe et du charbon actif ont été choisi pour permettre un mélange homogène et une meilleure mise en forme lors du procédé de fabrication. Ainsi, le mélange de la zéolithe avec le charbon actif n'entraîne pas de perte de charge additionnelle ni de difficultés de mise en oeuvre.
La composition 1 comprend un charbon actif 4. Deux charbons actifs différents ont été testés. Un premier charbon actif 4a utilisé a les propriétés physiques sont les suivantes : surface B.E.T de 1004 m²/g, volume microporeux de 0,356 cm³/g, volume poreux total de 0,422 cm³/g et diamètre médian de pores de 4,6 Å. Un deuxième charbon actif 4b utilisé a les propriétés physiques sont les suivantes : surface B.E.T de 960 m²/g, volume microporeux de 0,344 cm³/g, volume poreux total de 0,404 cm³/g et diamètre médian de pores de 5,0 Å. Les figures 3 à 7 sont des tableaux illustrant les courbes de percée d'un gaz polluant, pour le charbon actif 4 seul, la zéolithe 2 seule et la composition comprenant la zéolithe et le charbon actif 4. Une courbe de percée illustre l'efficacité de la filtration du gaz polluant par le ou les adsorbant(s) sélectionné(s). En ordonnée, un rapport entre la concentration en gaz polluant en aval (Cs) d'un filtre comprenant le ou les adsorbants et la concentration en gaz polluant en amont (Ce) du filtre est donnée. Les termes « aval » et « amont » s'entendent selon le sens de parcours d'un flux d'air traversant le filtre et véhiculant le gaz polluant. En conséquence, plus la concentration en gaz polluant est élevée, plus l'adsorption du gaz polluant par le ou les adsorbant(s) est inefficace. Il est rappelé que les résultats des tests présentés dans ces tableaux ont été réalisés avec des mélanges basses concentrations.
Sur la figure 3, le gaz polluant est le toluène. Le charbon actif 4 présente une bonne capacité de filtration du toluène puisque la concentration de ce dernier n'excède jamais 0,3. La zéolithe seule présente une très nette insuffisance de filtration du toluène avec des pics du rapport Cs/Ce au-delà de 1,2. Quant à la composition selon l'invention, elle présente une efficacité de filtration supérieure à celle du charbon actif 4 seul.

Sur la figure 4, le gaz polluant est n-butane. Selon ce tableau, on constate que la combinaison de la zéolithe 2 et du charbon actif 4 présente une meilleure efficacité sur la filtration du n-butane que celle du charbon actif 4 seul ou de la zéolithe seule. Plus précisément, la filtration de la composition selon l'invention est meilleure que les filtrations cumulées du charbon actif 4 et de la zéolithe 2. Il existe donc une synergie à combiner le charbon actif 4 avec la zéolithe 2.

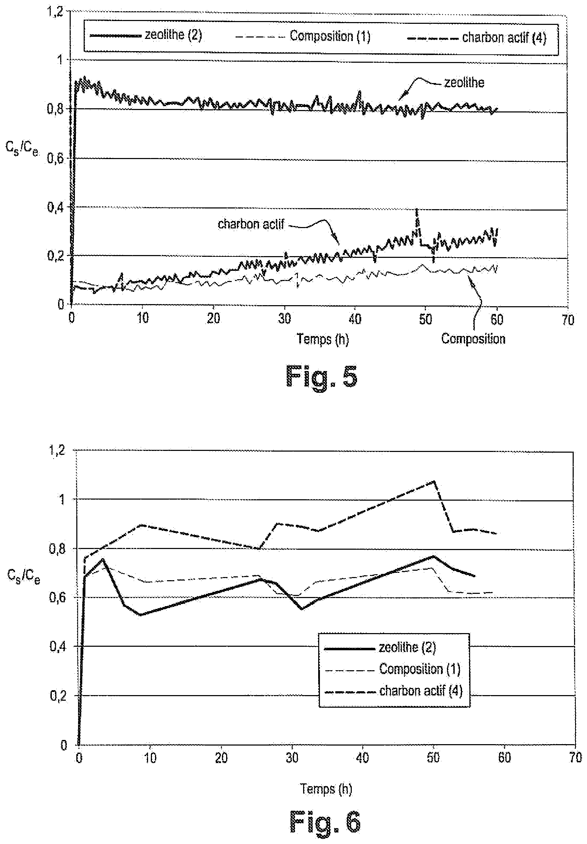

Sur la figure 5, le gaz polluant est le dioxyde d'azote (NO₂). L'action de la zéolithe 2 seule ou celle du charbon actif 4 seul sur la filtration du dioxyde d'azote est sensiblement moindre que l'action de la composition selon l'invention. Les résultats de la filtration du dioxyde d'azote montrent qu'il existe une synergie dans la composition selon l'invention et que cette composition n'est pas la simple juxtaposition de deux adsorbants. En effet, la composition 1 présente un rapport Cs/Ce inférieur à 0,2 après 60 heures d'exposition des adsorbants au flux d'air contenant le dioxyde d'azote, alors que la zéolithe 2 présente un rapport Cs/Ce supérieur à 0,8 et que le charbon actif 4 présente un rapport Cs/Ce supérieur à 0,3.

Sur la figure 6, le gaz polluant est l'acétaldéhyde. La composition 1 présente une meilleure filtration de l'acétaldéhyde que le charbon actif 4 seul ou la zéolithe 2 seule. A ce titre, la composition 1 possède un rapport Cs/Ce inférieur à 0,7 tandis que la zéolithe seul possède un rapport Cs/Ce de 0,7. On comprend donc que le mélange de la zéolithe et du charbon actif 4 améliore l'action de la zéolithe en elle-même vis-à-vis de l'acétaldéhyde.

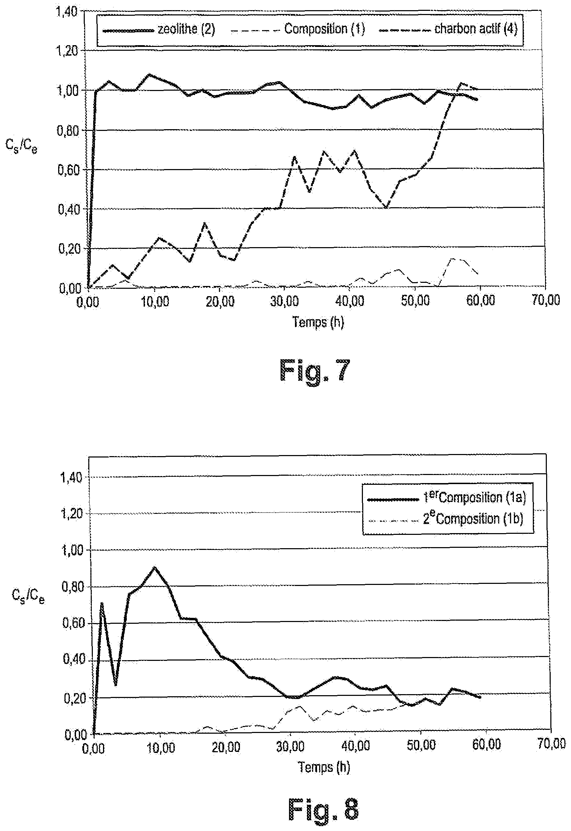

Sur la figure 7, le gaz polluant est le sulfure d'hydrogène (H₂S). Le mélange de zéolithe 2 et de charbon actif 4 montre une réelle amélioration de la filtration de ce gaz polluant par rapport à une simple juxtaposition des résultats de filtration de la zéolithe seule ou du charbon actif 4 seul.

A la lumière des figures 3 à 7, on comprend que le fait de mélanger la zéolithe avec du charbon actif améliore considérablement le pouvoir de filtration vis-à-vis de différents gaz polluants. Autrement dit, la composition selon l'invention améliore l'efficacité de filtration des gaz polluants en comparaison avec un filtre comprenant une couche de zéolithe et une couche de charbon actif, les deux couches étant physiquement séparées à l'intérieur du filtre. L'utilisation de charbon actif seul permet d'éliminer convenablement des gaz polluants (Toluène, n-butane, NO₂). La zéolithe est loin des performances du charbon actif sur les gaz cités ci-dessus, par contre, elle présente un intérêt sur l'adsorption d'aldéhydes, et plus particulièrement de l'acétaldéhyde et le sulfure d'hydrogène.

Le mélange des deux adsorbants permet donc d'accroître l'efficacité du matériau adsorbant vis-à-vis de certains polluants spécifiques tout en conservant les performances sur les autres polluants.

Ainsi, les performances sur toluène, n-butane et NO₂ sont maintenues malgré l'ajout de la zéolithe. Les performances sur acétaldéhyde sont sensiblement améliorées. Le mélange est également efficace sur H₂S. Cette solution permet alors une protection accrue de la santé humaine et du confort, en réduisant les nuisances olfactives.

Afin de ne pas diminuer les performances du charbon actif et de bénéficier de l'apport de la zéolithe, la proportion de zéolithe doit être comprise entre 5 et 35% en masse, préférentiellement entre 10 et 20%. De préférence encore, la proportion de zéolithe est de 15% en masse.

La figure 8 illustre la courbe de percée du sulfure d'hydrogène (H₂S) pour une première composition 1a comprenant la zéolithe 2 et le premier charbon actif 4a et pour une deuxième composition 1b comprenant la zéolithe 2 et le deuxième charbon actif 4b. Bien que la première composition 1a donne de bons résultats de filtration du sulfure d'hydrogène après 30 heures, la deuxième composition 1b présente une efficacité à la filtration plus importante. Après 30 heures, la première composition 1a présente un rapport Cs/Ce inférieur à 0,4 et la deuxième composition 1b présente un rapport Cs/Ce inférieur à 0,2. Il émerge de ces résultats que le choix de chaque adsorbant de la composition 1 est fait délibérément et s'appuie sur des résultats de filtration de gaz polluants probants. Ainsi, au-delà du choix particulier de la zéolithe 2 ayant une structure ZSM-5 et comprenant les ions Fe, le choix du charbon actif permet d'améliorer encore la synergie des adsorbants de la composition 1. En effet, il apparaît à la lumière des figures 3 à 8 que le mélange de la zéolithe 2 avec le deuxième charbon actif 4b présentent les meilleures performances de filtration sur tous les gaz polluants testés. Néanmoins, la première composition 1a comprenant la zéolithe 2 et le premier charbon actif 4a fournit des performances au-delà de celles de la zéolithe 2 et du charbon actif 4 pris isolément. Cette première composition 1a présente donc également une synergie par rapport à une zéolithe seule et à un charbon actif seul.

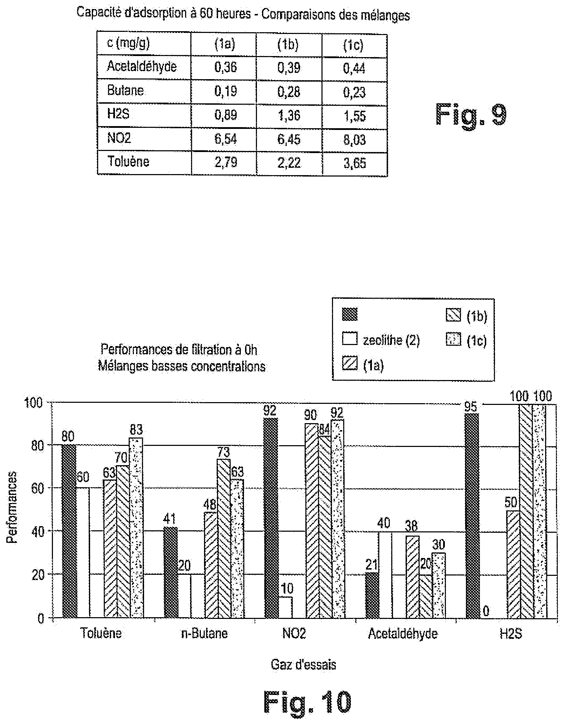

Les figures 9 à 12 illustrent des résultats comparatifs entre différentes compositions selon l'invention. La première composition 1a comprend le premier charbon actif 4a et la zéolithe 2, le rapport massique entre la zéolithe 2 et le premier charbon actif 4a est de 33%. La deuxième composition 1b comprend le deuxième charbon actif 4b et la zéolithe 2, le rapport massique entre la zéolithe et le deuxième charbon actif 4b est de 33%. La troisième composition 1c comprend le deuxième charbon actif 4b et la zéolithe 2, le rapport massique entre la zéolithe et le deuxième charbon actif 4b est de 15%.
En figure 9 est fournie la capacité d'adsorption de chaque composition testée pour différents gaz polluants. Il en découle que la troisième composition 1c est celle qui possède les meilleures capacités d'adsorption, notamment pour l'acétaldéhyde, le sulfure d'hydrogène, le dioxyde d'azote, le n-butane et le toluène.
Les essais donnant les résultats de performance de filtration des figures 10 à 12 sont à basse concentration (de l'ordre de quelques dizaines de µg/m³ pour une utilisation dans un véhicule automobile) et mélangés entre eux. Ainsi, un même flux d'air contenant l'ensemble des gaz polluants à tester traverse le filtre à air comprenant la composition selon l'invention. En outre, les gaz polluants testés sont les suivants : toluène, n-butane, dioxyde d'azote, acétaldéhyde et sulfure d'hydrogène.

En figure 10, il ressort que la troisième composition 1c procure une filtration meilleure que celle de la zéolithe seule et celle du charbon actif 4 seul à 0 heures, c'est-à-dire au moment où le flux d'air traverse le filtre à air. En effet, pour le toluène, la performance de filtration de la troisième composition 1c est de 83 tandis que celle de la zéolithe 2 est de 60 et celle du charbon actif 4 est de 80. Cela vaut également pour le n-butane et le sulfure d'hydrogène. Pour le dioxyde d'azote, la performance entre la troisième composition 1c et le charbon actif 4 est identique (valeur : 92) et la performance de la troisième composition 1c est nettement supérieure à celle de la zéolithe 2.

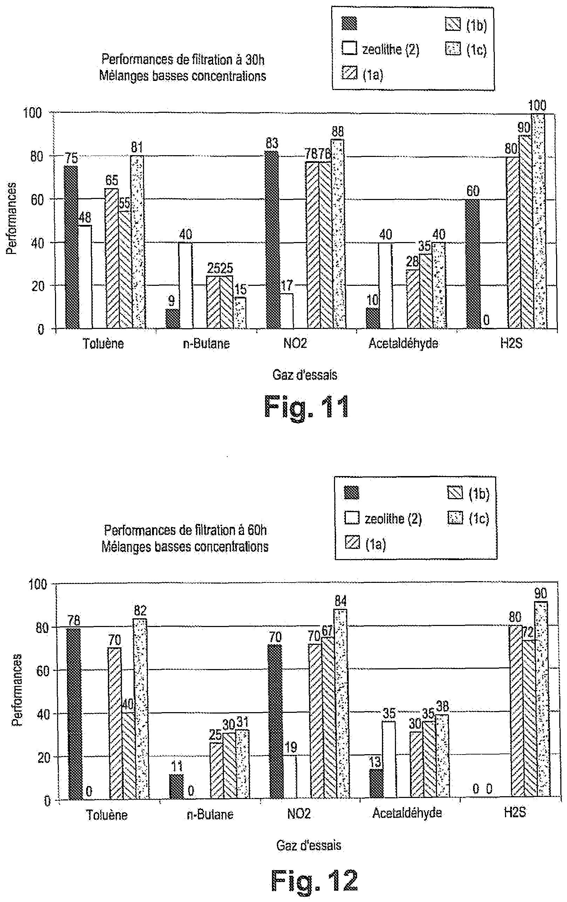

En figure 11, sont donnés les résultats de performance de filtration à 30 heures. La troisième composition 1c a des performances supérieures à celle des autres compositions 1a, 1b et à celle de la zéolithe 2 seule et du charbon actif 4 seul pour le toluène, le dioxyde d'azote et le sulfure d'hydrogène. Pour l'acétaldéhyde, la filtration de la troisième composition 1c est équivalente à celle de la zéolithe seule.

En figure 12, les résultats de performance de filtration à 60 heures illustrent le fait que la troisième composition 1c possède la meilleure performance de filtration pour le toluène, le n-butane, le dioxyde d'azote, l'acétaldéhyde et le sulfure d'hydrogène par rapport aux autres compositions 1a, 1b, à la zéolithe seule et au charbon actif seul.

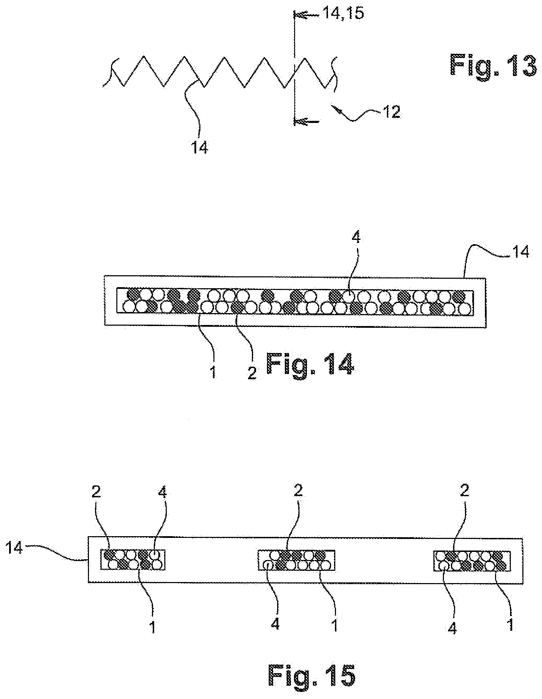

L'invention porte donc également sur un filtre à air 12 pour système de ventilation, chauffage et/ou climatisation comprenant la composition selon l'invention. Le filtre à air 12, illustré en figure 13, comprend un média filtrant 14 dans lequel est logé la composition 1. Le média filtrant 14 est un tissu non-tissé comportant plusieurs plis. Comme décrit précédemment, la composition 1 est un mélange de la zéolithe 2 et du charbon actif 4, le mélange permettant d'obtenir de meilleures performances de filtration que celles obtenues par la zéolithe 2 seule et le charbon actif 4 seul. La zéolithe 2 comprend les ions Fe. La composition 1 est donc formée par une couche unique telle que décrite en figure 13. On entend par « couche unique » le fait que la zéolithe et le charbon actif soient mélangés l'un à l'autre et qu'aucun obstacle physique ne les sépare. A l'intérieur du filtre à air, la composition est répartie soit à l'intérieur de l'ensemble du média filtrant (figure 14) soit par bandes à l'intérieur du média filtrant (figure 15). En variante, la composition est disposée sur le média filtrant.
En variante, la composition comprend au moins un troisième adsorbant. Par exemple, la composition comprend la zéolithe, le charbon actif, le charbon actif étant un mélange de charbons actifs distincts. Ainsi, la composition comprend trois adsorbants : la zéolithe et deux charbons actifs distincts. On entend par « distinct » le fait que les charbons actifs formant le mélange ont des propriétés physiques différentes. Par exemple, le mélange de charbons actifs est formé par le premier charbon actif 4a et le deuxième charbon actif 4b. Un troisième charbon actif 4c présentant les caractéristiques suivantes est également utilisé. Ce troisième charbon actif 4c présente comme propriétés physiques : volume microporeux de 0,327 cm³/g, volume poreux total de 0,346 cm³/g, pourcentage de volume microporeux de 95%, diamètre médian des pores de 6,8 Ǻ et une surface B.E.T. de 969 m²/g. ce charbon actif est couramment référencé par l'appellation « charbon actif NC60 ». Le mélange de charbon actif est donc soit le mélange du premier 4a et du deuxième 4b charbon actif, soit le premier 4a et le troisième 4c charbon actif, soit le deuxième 4b et le troisième 4c charbon actif.

## Revendications

1. Composition (1) comprenant un charbon actif (4) et une zéolithe (2), **caractérisée en ce que** la zéolithe (2) comprend 0,1 à 1,2% en masse d'ions Fe et le rapport massique entre la zéolithe (2) et le charbon actif (4) est compris entre 5 et 35%.

2. Composition (1) selon la revendication précédente, dans laquelle les ions Fe sont des ions ferriques ou ferreux.

3. Composition (1) selon l'une quelconque des revendications précédentes, dans laquelle les ions Fe sont retenus à l'intérieur de la zéolithe (2).

4. Composition (1) selon l'une quelconque des revendications précédentes, dans laquelle la zéolithe (2) a une structure cristalline ZSM-5.

5. Composition (1) selon l'une quelconque des revendications précédentes, dans laquelle la zéolithe (2) a un rapport molaire de SiO₂/Al₂O₃ compris entre 60 et 20.

6. Composition (1) selon l'une quelconque des revendications précédentes, dans laquelle la zéolithe a un rapport molaire de SiO₂/Al₂O₃ compris entre 50 et 30.

7. Composition (1) selon l'une quelconque des revendications précédentes, dans laquelle la zéolithe (2) a un rapport molaire de SiO₂/Al₂O₃ de 40.

8. Composition (1) selon l'une quelconque des revendications précédentes, dans laquelle la zéolithe (2) est hydrophobe.

9. Composition (1) selon l'une quelconque des revendications précédentes, dans laquelle le rapport massique entre la zéolithe et le charbon actif est compris entre 10 et 20%.

10. Composition (1) selon l'une quelconque des revendications précédentes, dans laquelle le rapport massique entre la zéolithe et le charbon actif est de 15%.

11. Composition (1) selon l'une quelconque des revendications précédentes, dans laquelle le charbon actif a une surface B.E.T de 1004 m²/g, un volume microporeux de 0,356 cm³/g, un volume poreux total de 0,422 cm³/g et un diamètre médian de pores de 4,6 Ǻ.

12. Composition (1) selon l'une quelconque des revendications 1 à 10, dans laquelle le charbon actif a une surface B.E.T de 960 m²/g, un volume microporeux de 0,344 cm³/g, un volume poreux total de 0,404 cm³/g et un diamètre médian de pores de 5,0 Ǻ.

13. Composition (1) selon l'une quelconque des revendications 1 à 10, dans laquelle le charbon actif a une surface B.E.T de 969 m²/g, un volume microporeux de 0,327 cm³/g, un volume poreux total de 0,346 cm³/g et un diamètre médian de pores de 6,8 Ǻ.

14. Composition (1) selon l'une quelconque des revendications précédentes, dans laquelle le charbon actif est un mélange de charbons actifs distincts.

15. Filtre à air (12) pour système de ventilation, chauffage et/ou climatisation comprenant la composition (1) selon l'une quelconque des revendications précédentes.

16. Filtre à air selon la revendication précédente, dans lequel la zéolithe et le charbon actif sont disposés selon une unique couche.

## Patentansprüche

1. Zusammensetzung (1), umfassend eine aktivierte Kohle (4) und einen Zeolith (2), **dadurch gekennzeichnet, dass** der Zeolith (2) einen Massenanteil 0,1 bis 1,2 % der Masse von Fe-Ionen umfasst und das Massenverhältnis zwischen dem Zeolith (2) und der aktivierten Kohle (4) zwischen 5 und 35 % liegt.

2. Zusammensetzung (1) nach dem vorstehenden Anspruch, wobei die Fe-Ionen Eisen(III)- oder Eisen(II)-Ionen sind.

3. Zusammensetzung (1) nach einem der vorstehenden Ansprüche, wobei die Fe-Ionen innerhalb des Zeoliths (2) gehalten werden.

4. Zusammensetzung (1) nach einem der vorstehenden Ansprüche, wobei der Zeolith (2) eine kristalline ZSM-5-Struktur aufweist.

5. Zusammensetzung (1) nach einem der vorstehenden Ansprüche, wobei der Zeolith (2) ein molares SiO₂/Al₂O₃-Verhältnis zwischen 60 und 20 aufweist.

6. Zusammensetzung (1) nach einem der vorstehenden Ansprüche, wobei der Zeolith (2) ein molares SiO₂/Al₂O₃-Verhältnis zwischen 50 und 30 aufweist.

7. Zusammensetzung (1) nach einem der vorstehenden Ansprüche, wobei der Zeolith (2) ein molares SiO₂/Al₂O₃-Verhältnis von 40 aufweist.

8. Zusammensetzung (1) nach einem der vorstehenden Ansprüche, wobei der Zeolith (2) hydrophob ist.

9. Zusammensetzung (1) nach einem der vorstehenden Ansprüche, wobei das Massenverhältnis zwischen dem Zeolith und der aktivierten Kohle zwischen 10 und 20 % liegt.

10. Zusammensetzung (1) nach einem der vorstehenden Ansprüche, wobei das Massenverhältnis zwischen dem Zeolith und der aktivierten Kohle 15 % beträgt.

11. Zusammensetzung (1) nach einem der vorstehenden Ansprüche, wobei die aktivierte Kohle eine BET-Oberfläche von 1004 m²/g, ein Mikroporenvolumen von 0,356 cm³/g, ein Gesamtporenvolumen von 0,422 cm³/g und einen mittleren Porendurchmesser von 4,6 Ä aufweist.

12. Zusammensetzung (1) nach einem der Ansprüche 1 bis 10, wobei die aktivierte Kohle eine BET-Oberfläche von 960 m²/g, ein Mikroporenvolumen von 0,344 cm³/g, ein Gesamtporenvolumen von 0,404 cm³/g und einen mittleren Porendurchmesser von 5,0 Ä aufweist.

13. Zusammensetzung (1) nach einem der Ansprüche 1 bis 10, wobei die aktivierte Kohle eine BET-Oberfläche von 969 m²/g, ein Mikroporenvolumen von 0,327 cm³/g, ein Gesamtporenvolumen von 0,346 cm³/g und einen mittleren Porendurchmesser von 6,8 Ä aufweist.

14. Zusammensetzung (1) nach einem der vorstehenden Ansprüche, wobei die aktivierte Kohle ein Gemisch von verschiedenen aktivierten Kohlen ist.

15. Luftfilter (12) für ein Lüftungssystem, eine Heizung und/oder eine Klimaanlage, der die Zusammensetzung (1) nach einem der vorstehenden Ansprüche umfasst.

16. Luftfilter nach dem vorstehenden Anspruch, wobei der Zeolith und die aktivierte Kohle gemäß einer einzigen Schicht angeordnet sind.

## Claims

1. Composition (1) comprising an activated carbon (4) and a zeolite (2), **characterised in that** the zeolite (2) comprises from 0.1 to 1.2% by mass of Fe ions and the mass ratio between the zeolite (2) and the activated carbon (4) is comprised between 5 and 35%.

2. Composition (1) according to the preceding claim, wherein the Fe ions are ferric or ferrous ions.

3. Composition (1) according to any one of the previous claims, wherein the Fe ions are retained inside the zeolite (2).

4. Composition (1) according to one of the preceding claims, wherein the zeolite (2) has a ZSM-5 crystal structure.

5. Composition (1) according to any one of the preceding claims, wherein the zeolite (2) has a molar ratio of SiO₂/Al₂O₃ between 60 and 20.

6. Composition (1) according to any one of the preceding claims, wherein the zeolite has a molar ratio of SiO₂/Al₂O₃ between 50 and 30.

7. Composition (1) according to any one of the preceding claims, wherein the zeolite (2) has a molar ratio of SiO₂/Al₂O₃ of 40.

8. Composition (1) according to any one of the preceding claims, wherein the zeolite (2) is hydrophobic.

9. Composition (1) according to any one of the preceding claims, wherein the mass ratio between the zeolite and the activated carbon is between 10 and 20%.

10. Composition (1) according to any one of the preceding claims, wherein the mass ratio between the zeolite and the activated carbon is 15%.

11. Composition (1) according to any one of the preceding claims, wherein the activated carbon has a B.E.T surface area of 1004 m²/g, a microporous volume of 0.356 cm³/g, a total porous volume of 0.422 cm³/g and a median pore diameter of 4.6 Å.

12. Composition (1) according to any one of claims 1 to 10, wherein the activated carbon has a B.E.T surface area of 960 m²/g, a microporous volume of 0.344 cm³/g, a total porous volume of 0.404 cm3/g and a median pore diameter of 5.0 Å.

13. Composition (1) according to any one of claims 1 to 10, wherein the activated carbon has a B.E.T surface area of 969 m²/g, a microporous volume of 0.327 cm³/g, a total porous volume of 0.346 cm³/g and a median pore diameter of 6.8 Å.

14. Composition (1) according to any one of the preceding claims, wherein the activated carbon is a mixture of distinct activated carbons.

15. Air filter (12) for a ventilation, heating and/or air conditioning system comprising the composition (1) according to any one of the preceding claims.

16. Air filter according to the preceding claim, wherein the zeolite and the activated carbon are arranged in a single layer.
